# EUROPEAN PATENT APPLICATION

(11) **EP 0 810 513 A1**
(43) Date of publication of application: **03.12.1997**
(21) Application number: 97201344.5
(22) Date of filing: 06.05.1997
(51) Int. Cl.: G06F 3/033

(54) **Data processing entry system provided with soft keyboard that has an ergonomic layout based on preferred positions of certain characters**

(30) Priority: 31.05.1996 EP 96201517
(71) Applicant: Philips Electronics N.V., 5621 BA Eindhoven (NL)
(72) Inventor: Smeets, Joseph Pierre Antonius, 5656 AA Eindhoven (NL)
(74) Representative: Peters, Rudolf Johannes

(57) **Abstract**

A data processing system represents a multi-character keyboard on-screen. User pointing activates a particular key for presenting associated key data to the system. The keyboard represents all letter keys according to a compact ergonomic layout based on rows and columns that has edge positions reserved for vowels. Further letters are arranged on respective key lines terminating at the edge positions according to a standard alphabet sequence whilst suppressing any further vowel key.

## Description

### BACKGROUND TO THE INVENTION

The invention relates to a data processing system based on a keyboard structure for a multi-character keyboard, representation means for on-screen representing said keyboard structure, and user pointing means for through pointing activating a particular keyboard key for thereby presenting associated key data to said system. Most data processing systems such as personal computers, are keyboard-oriented, in that they are provided with a hardware keyboard of the QWERTY or similar type, if the Latin, Greek, Cyrillic, or similar alphabet is used. Usually the keyboard is augmented with other keys such as control keys, numerical keys, space bar, and special function keys. However, many other data processing systems are more screen-oriented and have an on-screen representation of a so-called 'soft keyboard'. Actuating a key is then done by some pointing device, such as mouse, joystick, tracker ball, or even with non-computer devices, such as a pencil or a finger. It has been found that selecting among the keys often implies user requirements that need a high degree of motor skill. The term **data processing system** is understood to include systems wherein the data are not changed, such as data entry systems, data storage systems, or data terminals. The multi-character keyboard comprises a relatively large number of letter and/or digit keys, sometimes enhanced with control keys that expand the character or word processing functionality, such as punctuation marks, enter or delete keys, or additional non-character keys. Pointing at a key can be effected in various ways, such as through a pencil touching the screen, or through moving a cursor by means of a mouse and subsequently clicking a mouse button.

### SUMMARY TO THE INVENTION

Therefore, amongst other things it is an object of the present invention to provide a data processing system according to the preamble with a representable soft keyboard that features a large number of actuatable keys, such as a whole Latin alphabet, while still to a high degree facilitating its use by a large segment of the population. Now, according to one of its aspects, the invention is characterized in that said representation means are operative for representing all letter keys according to a compact ergonomic layout based on rows and columns that has edge positions reserved for vowels, and further letter keys arranged on respective key lines terminating at said edge positions according to standard alphabet sequence whilst suppressing or avoiding any further vowel key. Vowels have been found to represent a particular subclass of all letters, that are experienced by users in a different manner from consonants, in that people tend to memorize a word in the first place through its configuration of vocals. Moreover, the number of vowels in the alphabet is usually relatively small, so that each of the respective vowels is used relatively more often in written language. This renders the number of available edge positions in the keyboard representation quite sufficient for accommodating all vowels, and users will know to find the vowels in a very easy manner.

Advantageously, said layout is a rectangular array that is substantially dedicated to letter keys only. The letter block has thus allowed to position a pointing device in a straightforward manner, which is intuitively user-friendly.

Advantageously, the vowel keys are edge stopped, in that the cursor is constrained from crossing such edge. This allows to faster attain the location of the vowel in question, inasmuch as no cursor overshoot is liable to occur.

### BRIEF DESCRIPTION OF THE DRAWING

These and other aspects and advantages of the invention will be discussed hereinafter more in detail with reference to the disclosure of preferred embodiments, and more in particular with reference to the appended Figures that show:
Figure 1, a data processing system according to the invention;
Figure 2, a keyboard structure of the invention.

### DETAILED DESCRIPTION OF PREFERRED EMBODIMENTS

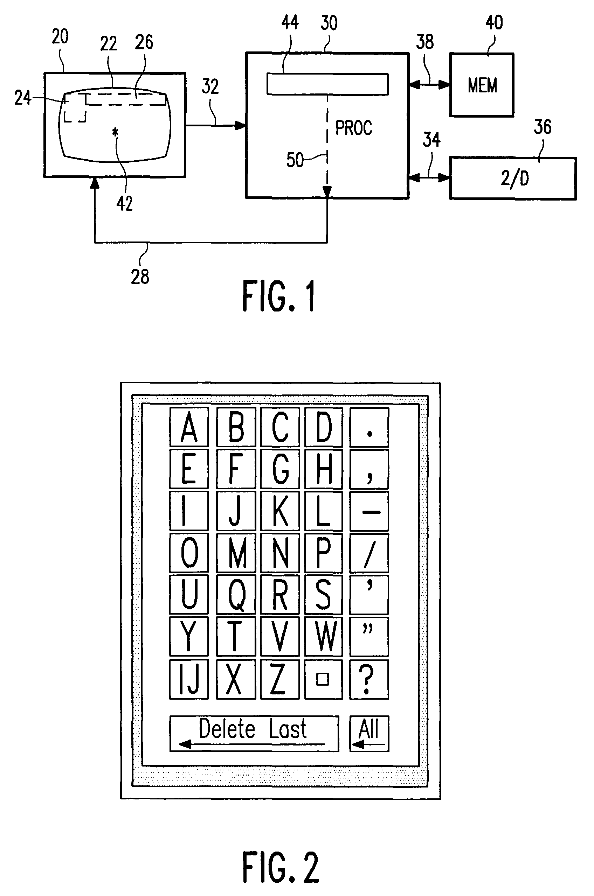

Figure 1 shows a data processing system according to the invention. The central element is processor 30 that via line 38 is connected to external memory 40, which may be RAM, floppy drive, optical disc drive or other. The processor via line 28 feeds video display 20 with video signals for effecting a display on screen 22. Further I/O devices, such as for example, a speech channel, hardware keys, or a cursor controller are symbolized by block 36 interconnected via line 34. As shown, the screen 22 has an on-screen field 24 for representing the keyboard structure. Layout and operation embodiments will be discussed with reference to Figure 2. Further screen field 26 can be used for representing a line of text, such as may have been developed by successive key actuations through field 24. A cursor representation has been indicated by item 42. Block 44 internal to the processor 30 symbolizes a keyboard structure, such as the relative locations of the various keys with respect to each other, that may be stored in appropriate internal memory locations of the processor. For representation on screen 22, the character shapes of the various keys are sent via line 50 for being included in the overall screen image. By itself, the representation of particular keys in appropriate areas of a display screen is standard technology and will not be discussed in detail. The remainder of the display is application-specific and irrelevant for the disclosure of the present invention.

The pointing on a particular character in field 24 may be effected in various ways. A first one is by controlling cursor 42 to go to the wanted character, and subsequently actuating that character by a single actuation button, such as on I/O device 36. A second one is by pointing with a finger or other appropriate object, such as a stylus, to the intended character. This pointing may be detected by a special overlay device to the screen (not shown) which sends an associated position detection signal to the processor. Various other pointing devices and methodologies are known in the art.

Figure 2 shows a keyboard structure according to the invention as use for the Dutch language. The Dutch language has five standard vocals A, E, I, O, U. Moreover, it also uses the Y, and in addition, a letter IJ, which has here been represented as a **pair** of letters (**I+J**), but which in Dutch is generally looked upon as a vocal. All letters have been positioned in a block of 4X6 letter fields, leaving one position unused. The seven "vowels" occupy the left edge column. The other letters have been assigned to the other columns of the seven key lines terminating at the respective edge positions of the seven vowels. The sequence is according to the natural sequence, be it with the vowels suppressed. In the embodiment, this also corresponds exactly to the natural sequence in the first three lines, until in the fourth line the vowel **O** precedes its natural rank by two positions. Likewise, vowel **U** precedes its natural position by four positions, vowel **Y** precedes its natural position by five positions, and "vowel" **IJ** precedes its natural position by one position. The 28th position has been reserved for an **enter** control or **space control key**. The righthand edge is occupied by seven interpunction marks. The lower line of keys has been reserved for other purposes, in particular for a **delete** key. In a simple embodiment, various of the control keys could be left out.

The keyboard has been specifically designed for use on the left hand edge of the screen, preferably in the upper left hand corner. A slightly less advantageous position is in the lower left hand corner, or on the middle of the left hand screen edge. Various advantages of the layout are the following:
* the sequence of the letters is very close to the 'normal' sequence of the alphabet; this makes orientation relatively simple, and largely intuitive.
* in the embodiment (upper left hand corner) ten out of 28 letter keys are edge-stopped, in that the cursor cannot move further out, regardless of the efforts of the user; note that also the decimal point or full stop character is edge-stopped; this feature enhances ease-of-use.
* vowels as a class are relatively more often used than most other characters; and in particular they are edge-stopped if the rectangular array touches the left hand screen edge; this means that the cursor is blocked or otherwise dispelled from crossing the edge in question, which enhances user friendliness when the user moves the cursor; as an alternative to the layout shown, the keyboard may have a single stopping edge at left, or rather three stopping edges, at the top, the left hand edge, and the lower edge, respectively.
* users tend to use vowels as an orientation item of a particular word, in that they memorize the vowel easier than most consonants.

The layout as shown can be amended in various ways:
- Languages that have no **IJ** character, could have the associated position left blank. An alternative solution restricts the number of rows to **six** only. The successive rows then have the letters as follows:
   **A**BCDF **E**GHJK **I**LMNP **O**QRST **U**VWXZ **Y**
   This leaves free four positions in the lower row, for the type of usage that has been illustrated with reference to Figure 2 already.
- The vowels are positioned in the top row, and the consonants descend therefrom along the columns; then of course, the **A** is still in the top left position.
- Languages that normally write from right to left, can have their vowel-like letters in the rightmost column, and preferable at the right hand edge of the display screen.
- Digits can be added: in the embodiments shown in particular, the digits can fill two additional rows below the 5X7 array.
- Other alphabets, such as Cyrillic, Hebrew or Greek, have different sequences among the letters, but also here, a slight adaptation is sufficient to attain the advantages of the invention. In particular, the number of characters may be either lower or higher; for certain applications, also the standard Latin alphabet could have certain letters suppressed, or rather, extra letters added.

## Claims

1. A data processing system based on a keyboard structure for a multi-character keyboard, representation means for on-screen representing said keyboard structure, and user pointing means for through pointing activating a particular keyboard key for thereby presenting associated key data to said system,
characterized in that said representation means are operative for representing all letter keys according to a compact ergonomic layout based on rows and columns that has edge positions reserved for vowels, and further letter keys arranged on respective key lines terminating at said edge positions according to standard alphabet sequence whilst suppressing or avoiding any further vowel key.

2. A system as claimed in Claim 1, wherein said layout is a rectangular array that is substantially dedicated to letter keys only.

3. A system as claimed in Claim 1 or 2, wherein said edge position is a sideward position.

4. A system as claimed in Claims 1, 2 or 3, wherein the vowel keys are edge stopped, in that the cursor is constrained from crossing such edge.

5. A system as claimed in Claim 4, and having two or three stopped edges.

6. A system as claimed in any of Claims 1 to 5, and having seven vocal keys.

7. A system as claimed in any of Claims 1 to 6, wherein a further line of keys is reserved for interpunction marks.

8. A system as claimed in any of Claims 1 to 7, and augmented by numerical digit keys.
